# EUROPÄISCHE PATENTANMELDUNG

(11) **EP 2 564 959 A1**
(43) Veröffentlichungstag der Anmeldung: **06.03.2013**
(21) Anmeldenummer: 11166950.3
(22) Anmeldetag: 20.02.2004
(51) Int. Cl.: B23B 31/02, B23B 31/30, B23Q 11/10

(54) **Stellschraube für ein Spannfutter und damit ausgerüstetes Spannfutter für ein Werkzeug**

(30) Priorität: 20.02.2003 DE 10307437; 21.03.2003 DE 10312743
(62) Teilanmeldung aus: 04713001.8
(71) Anmelder: Gühring, Jörg, 72458 Albstadt (DE)
(72) Erfinder: Hänle, Peter, Dr., Wales WI 53183 (US); Matheis, Klaus, 88605, Sauldorf/Rast (DE); Gsänger, Dieter, 72511, Bingen (DE)
(74) Vertreter: Winter, Brandl, Fürniss, Hübner, Röss, Kaiser, Polte - Partnerschaft

(57) **Zusammenfassung**

Beschrieben wird eine Stellschraube für die abgedichtete Einspeisung von Schmiermittel in ein Werkzeug und zur Verwendung mit einem Spannfutter, in dem die Einstecktiefe des Werkzeugs veränderbar ist. Die Stellschraube hat ein Außengewinde (G15) zum Eingriff in ein Spannfutter (4), in dem eine mit einer Durchgangsbohrung (17) ausgestattete Einspeisehülse (13) aufgenommen ist, eine Anschlag-Stirnseite (30) für das Werkzeug, einen Kanal (29) für die Zufuhr von Schmiermittel, der die Verlängerung eines Kanals (26) in einem Rohrabschnitt (14) bildet, und einen Eingriff (27) für ein Verstellwerkzeug, mit dem die Anschlag-Stirnseite aus einer Stellung, in der sie an einem Anschlag im Spannfutter anschlägt, an das im Spannfutter aufgenommene Werkzeug heran drehbar ist. Die Besonderheit besteht darin, dass der Anschlag mit dem Spannfutter von einem gegenüber dem Außengewinde (G15) im Durchmesser vergrößerten Schraubenkopf gebildet ist, und der Eingriff (27) in der Stellschraube (15) so ausgebildet ist, dass diese mittels eines Stellwerkzeugs unter Durchgriff der Durchgangsbohrung (17) der Einspeisehülse (13) und des Kanals (29) des Rohrabschnitts (14) verstellbar ist.

## Beschreibung

Die Erfindung betrifft allgemein ein Spannfutter für ein Werkzeug und im Besonderen eine Stellschraube zur Verwendung in einem solchen Spannfutter nach dem Oberbegriff des Anspruchs 1.

Aus der DE 199 35 960 A1 ist ein Spannfutter für ein Werkzeug mit einer Vorrichtung zur Zuführung eines Kühl- bzw. Schmiermediums von einer Spindel an ein Werkzeug mit einem Kühlkanal bekannt. Die EP 1 127 656 B1 beschreibt ein Spannfutter gemäß Anspruch 7 und eine Stellschraube gemäß dem Oberbegriff des Anspruchs 1, d.h. einen Werkzeughalter für eine Werkzeugmaschine, in welchem ein Verbindungsröhrchen gleitend und abhängig von der Länge eines einzusetzenden Werkzeugs längs verstellbar in einem Schmiermittelaufnahmerohr gelagert ist.

Weiterhin ist aus der TA 30 8243 01 der Firma bielomatik LEUZE GmbH + Co, D-72637 Neuffen ein derartiges Spannfutter bekannt. Dieses ist auch als Spannfutter für Werkzeuge verwendbar, welche in unterschiedlicher Tiefe im Spannfutter gehalten werden müssen und hierzu mittels einer Schrumpfverbindung oder mittels eines Hydrodehnspannfutters gehalten werden. Die Versorgung des Werkzeugs mit einem Kühl- bzw. Schmiermittel erfolgt über eine fest mit dem Futter verschraubte Hülse, welcher von der Spindel das Schmiermittel zugeführt wird, wobei in diese Hülse eine Rohrdüse eingepresst ist, die das Schmiermittel zu einer Stellschraube weiter transportiert. Hierbei ist die Rohrdüse bzw. das Rohrelement in der Stellschraube längsverschiebbar geführt und die Stellschraube ist mittels eines Drehschlüssels im Spannfutter ebenfalls längsverstellbar, so dass die Stellschraube auf Kontakt an das im Spannfutter gespannte Werkzeug herandrehbar ist. Die Stellschraube findet auch Verwendung zur manuellen Einstellung der Einstecktiefe des Werkzeugs, wobei zum Verdrehen der Stellschraube die Rohrdüse und die Hülse vorübergehend demontiert werden müssen. Diese vorübergehende Demontage ist auch erforderlich, wenn die Einstecktiefeneinstellung mittels einer Lanze automatisiert erfolgt (siehe z.B. Induktives Schrumpfgerät GISS 3000 im Katalog der Fa. Gühring: "Präzisions-Schneidwerkzeuge" Ausgabe 2002, Seite 958), um die Stellschraube nach dem Einstellvorgang auf Kontakt mit dem Werkzeug zu drehen, damit eine Verwirbelung der Kühl- bzw. Schmiermittelströmung in einem Freiraum zwischen der Stellschraube und dem Werkzeug vermieden ist. Nachteilig am Stand der Technik ist somit die Notwendigkeit, die in dem Spannfutter angeordnete Kühlmittelzuführung bei jedem für das Werkzeug erforderlichen Nachstellvorgang zu demontieren und zu montieren.

Aufgabe der Erfindung ist es ein Spannfutter vorzuschlagen, welches die Arbeitsschritte beim ersten und beim wiederholten Einstellen der Einstecktiefe eines Werkzeugs vereinfacht bzw. reduziert. Eine weitere Aufgabe besteht in der Schaffung einer Einstellschraube, mit der ein wirtschaftlicherer Betrieb eines gattungsgemäßen Spannfutters möglich ist.

Die Aufgabe wird bezüglich der Stellschraube durch die Merkmale des Anspruchs 1 und hinsichtlich des Spannfutters, in dem die erfindungsgemäße Stellschraube aufgenommen ist, durch die Merkmale des Anspruchs 7 gelöst. In den Unteransprüchen sind vorteilhafte und zweckmäßige Weiterbildungen angegeben.

Das erfindungsgemäße Spannfutter weist ein Rohrelement auf, welches in der Hülse längsverschiebbar ist, an einem in der Hülse befindlichen Ende durch ein Stellwerkzeug betätigbar ist und mit der Stellschraube formschlüssig und/oder kraftschlüssig in Verbindung steht. Hierdurch ist es möglich die Stellschraube insbesondere bei der Ausbildung eines geeigneten Eingriffs am Rohrelement direkt mittels eines Stellwerkzeugs, welches durch die Hülse mit dem Eingriff zusammen wirkt, unter Zwischenschaltung des Rohrelements zu verdrehen, ohne das Rohrelement und die Hülse dazu demontieren zu müssen. Dies bedeutet, dass die Stellschraube nach einem automatisierten Einstellen der Einstecktiefe eines Werkzeugs, welche in einer speziellen Vorrichtung mittels einer Lanze vorgenommen wird, ohne Demontage von Hülse und Rohrelement an das Werkzeug herandrehbar ist. Ebenso ist es möglich bei einer manuellen Einstellung der Einstecktiefe des Werkzeugs, bei welcher statt der Lanze die Stellschraube als Anschlag für die Einstecktiefenbestimmung des Werkzeugs dient, die Einstellschraube ohne Demontage der Hülse und des Rohrelements mit dem Stellwerkzeug in die gewünschte Position zu drehen. Diese Vorteile hat der Anwender auch dann, wenn das Werkzeug in Folge der Abnutzung neu justiert, das heißt mit einer anderen Einstecktiefe eingespannt werden muss.

Weiterhin sieht die Erfindung vor das Rohrelement mit der Stellschraube zu verkleben oder drehfest zu verschrauben bzw. durch eine entsprechende Kontur drehfest zu verbinden. Hierdurch lassen sich rasch Rohrelemente unterschiedlicher Länge und/oder unterschiedlicher Konstruktion mit der Stellschraube kombinieren.

Erfindungsgemäß ist es vorgesehen, das Rohrelement und die Stellschraube einteilig und insbesondere als Drehteil auszubilden. Eine einteilige Ausbildung von Rohrelement und Stellschraube erlaubt eine besonders einfache Handhabung der Bauteile, weiterhin kann hier der Übergang des in dem Rohrelement angeordneten Kanals auf die Bohrung der Stellschraube nach strömungstechnischen Gesichtspunkten optimal gestaltet werden.

Es ist vorteilhaft, wenn das Stellwerkzeug durch einen Kanal der Hülse hindurch in den Eingriff des Rohrelements greift und hierbei in dem Kanal drehbar ist. Dies erlaubt das einfache Verstellen der Stellschraube.

Eine erfindungsgemäße Ausführungsvariante sieht vor, das Rohrelement in der Hülse und/oder in der Stellschraube längsverschiebbar zu lagern und die Stellschraube für die Betätigung durch ein Stellwerkzeug zu gestalten, wobei das Stellwerkzeug von der dem Werkzeug entgegengesetzten Seite durch die Hülse und das Rohrelement eingreifen kann und gegenüber der Hülse und dem Rohrelement frei drehbar ist. Hierdurch werden ebenfalls die bereits beschriebenen Vorteile erreicht. Weiterhin erlaubt das direkte Zusammenwirken des Stellwerkzeugs mit der Stellschraube eine Drehmomentübertragung, welche das Rohrelement nicht belastet, so dass dieses schwächer und somit kostengünstiger ausgelegt werden kann. Hierzu ist an der Stellschraube beispielsweise ein Eingriff für das Stellwerkzeug ausgebildet.

Weiterhin ist es vorgesehen, bei der beschriebenen Ausführungsvariante die Hülse und das Rohrelement einteilig auszubilden, um die Zahl der Kleinteile zu reduzieren und die Handhabung bzw. den Einbau der Kleinteile einfacher zu gestalten.

Eine zweckmäßige Ausgestaltung des Erfindungsgegenstandes sieht vor, die Rohrdüse gegenüber der Hülse abzudichten. Hierdurch ist ein ungewünschter Kühl- bzw. Schmiermittelaustritt in Freiräume zwischen der Vorrichtung und dem Spannfutter vermieden.

Insbesondere ist es vorgesehen, das Rohrelement gegenüber der Hülse mittels einer Berührungsdichtung, Lippendichtung oder wenigstens eines O-Rings abzudichten, wobei der O-Ring in der Hülse und/oder an dem Rohrelement gelagert ist. Eine derartige Abdichtung erlaubt die Längsverschiebung des Rohrelements in der Hülse und auch ein wiederholtes Trennen und Kuppeln der Bauteile zu deren Wartung.

Erfindungsgemäß ist es vorgesehen, am Rohrelement oder an der Stellschraube einen Eingriff auszubilden, welcher insbesondere als Aufnahme für einen Steckschlüssel, insbesondere einen Sechskantschlüssel auszubilden. Hierdurch kann das Stellwerkzeug direkt mit dem Rohrelement oder der Stellschraube zusammenwirken. Mit einem Steckschlüssel steht ein besonders schlankes Stellwerkzeug zur Verfügung, welches zielsicher durch die Hülse einführbar ist.

Weiterhin sieht die Erfindung vor, die Hülse mit einem Innendurchmesser zu versehen, welcher sich zu dem Rohrelement hin wenigstens abschnittsweise verjüngt. Hierdurch wird der Kühl- bzw. Schmiermittelstrom düsenartig auf das Rohrelement zugeleitet, um das Entstehen von Wirbeln zu vermeiden.

Eine vorteilhafte Ausführungsform des Erfindungsgegenstandes sieht vor, die Hülse mittels einer Gewindehülse bzw. Überwurfmutter am Spannfutter zu verschrauben. Hierdurch ist eine sichere und dennoch einfach lösbare Verbindung geschaffen, welche die einfache Wartung aller Bauteile erlaubt.

Weiterhin ist es vorgesehen, die Hülse mittels einer Ringdichtung gegenüber dem Spannfutter abzudichten. Hierdurch wird mit einfachsten Mitteln eine wirksame Abdichtung erreicht.

Erfindungsgemäß ist es auch vorgesehen, die Durchgangsbohrung der Stellschraube zum Werkzeug hin trichterförmig zu öffnen. Eine derartige trichterförmige Öffnung zu dem Werkzeug hin erlaubt eine optimale Anströmung und Versorgung der im Werkzeug verlaufenden Kanäle mit Kühl- bzw. Schmiermittel.

Die Erfindung sieht weiter vor, die Hülse, das Rohrelement und die Stellschraube aus Kunststoff und/oder Metall und/oder Keramik auszubilden und die Hülse und/oder das Rohrelement und/oder die Stellschraube mit einer Beschichtung zu versehen. Hierdurch ist es möglich, die einzelnen Bauteile optimal auf die an diese gestellten Anforderungen auszulegen.

Erfindungsgemäß ist es vorgesehen, die Hülse, das Rohrelement und die Stellschraube so auszubilden, dass diese von einem Verstellbolzen einer automatischen Vorrichtung zur Einstellung der Position des Werkzeugs durchdringbar sind, wobei der Verstellbolzen in Richtung der Längsachse des Spannfutters, z.B. zur Positionierung eines Werkzeugs verschiebbar ist.

Weiterhin sieht die Erfindung vor, das Rohrelement mittelbar oder unmittelbar mit dem Stellwerkzeug zu verdrehen. Eine unmittelbare Verstellung erlaubt den direkten Eingriff mit dem Stellwerkzeug in das Rohrelement und somit eine genaue Einstellbarkeit des Rohrelements, da nur wenig Spiel zwischen den zusammenwirkenden Komponenten vorhanden ist. Der Einsatz eines Adapters zwischen dem Stellwerkzeug ermöglicht die Ausbildung eines speziellen Eingriffs im Rohrelement bei gleichzeitiger Anwendbarkeit von Standardwerkzeugen als Stellwerkzeug.

Durch den mehrteiligen Aufbau des Rohrelements aus Teilelementen, welche aus unterschiedlichen Werkstoffen bestehen, ist es möglich das Rohrelement an unterschiedliche Anforderungen optimal anzupassen, so kann dass Rohrelement im Bereich des Eingriffs für das Stellwerkzeug insbesondere aus einem torsionsfesten Material wie Metal aufgebaut sein und im Bereich seiner Stirnseite, welche im Betrieb am Werkzeug anliegt, aus Kunststoff bestehen, um eine besonders gute Abdichtung zum Werkzeug zu erhalten.

Abschließend sieht die Erfindung vor, das Rohrelement und die Hülse miteinander zu koppeln, um eine mit dem Stellwerkzeug in die Hülse eingeleitete Drehbewegung auf das Rohrelement zu übertragen. Hierbei ist es vorgesehen, dass das Rohrelement gegenüber der Hülse längsverschiebbar ist, aber die Drehbewegung der Hülse auf das Rohrelement übertragen wird. Bei einer derartigen Ausbildung der beiden Bauteile ist es insbesondere vorgesehen diese aus unterschiedlichen Materialien herzustellen und so auf die jeweiligen Funktionen optimal anzupassen. Beispielsweise ist die Hülse aus Metall hergestellt, um ein optimales Zusammenwirken mit dem Stellwerkzeug zu gewährleisten und das Rohrelement ist aus Kunststoff ausgebildet, um einen optimal abdichtenden Anschluss an das Werkzeug zu erhalten. Für die Drehmomentübertragung sind Mitnehmer und Führungsschlitze in der Hülse bzw. im Rohrelement entsprechend den Werkstoffeigenschaften zu dimensionieren.

Weitere Einzelheiten der Erfindung werden anhand von schematisch dargestellten Ausführungsbeispielen beschrieben.

Hierbei zeigt:
Fig. 1: einen Schnitt durch ein Spannfutter, bei welchem die Rohrdüse und die Stellschraube einteilig ausgeführt sind und
Fig. 2: einen Schnitt durch das in Fig. 1 gezeigte Spannfutter, mit einer Rohrdüse, die mit einer Stellschraube verklebt ist.

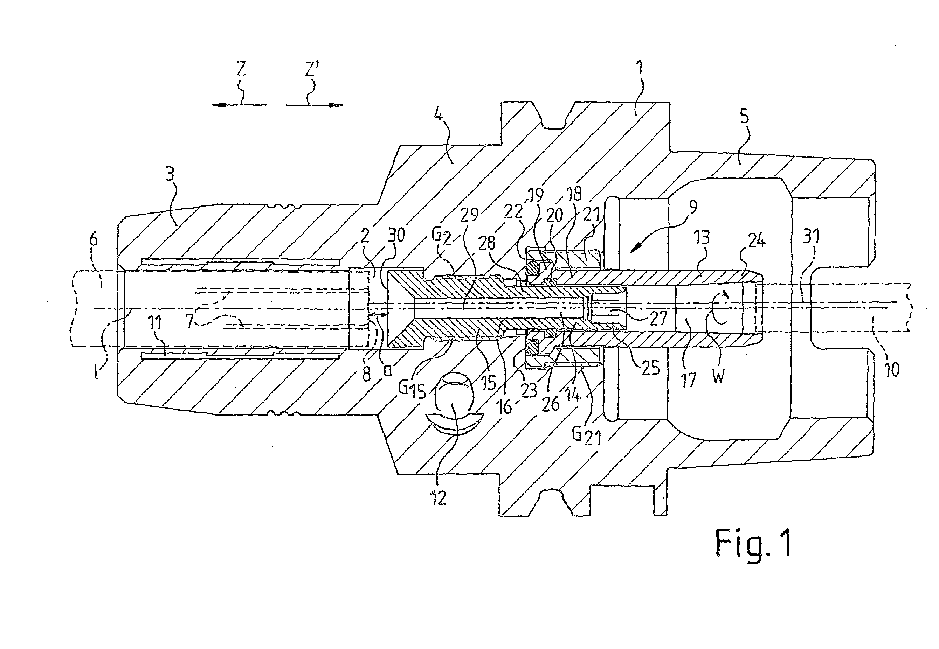

In Fig. 1 ist ein Spannfutter 1 im Schnitt dargestellt. Das Spannfutter 1 weist eine Längsachse l auf. Entlang der Längsachse l verläuft eine Bohrung 2 des Spannfutters 1, welche abschnittsweise unterschiedliche Durchmesser aufweist. Das Spannfutter 1 weist einen Spannabschnitt 3 , einen Mittelabschnitt 4 und einen Kupplungsabschnitt 5 auf. Der Spannabschnitt 3 ist dazu vorgesehen ein Werkzeug 6 (mit gestrichelten Linien angedeutet) aufzunehmen, welches Mediumkanäle 7 zum Transport von Kühl- bzw. Schmiermedium an eine nicht dargestellte Werkzeugspitze aufweist, die in einer Bodenfläche 8 münden. Im Mittelabschnitt 4 ist in der Bohrung 2 eine Vorrichtung 9 zur Zuführung eines Kühl- bzw. Schmiermediums an die Mediumkanäle 7 des Werkzeugs 6 angeordnet. Über den Kupplungsabschnitt 5 erfolgt die Ankupplung des Spannfutters 1 an eine nicht dargestellte Spindel einer nicht dargestellten Werkzeugmaschine, wobei von der Spindel über eine Leitung 10 (gestrichelt dargestellt) das Kühl- bzw. Schmiermedium der Vorrichtung 9 zugeführt wird. Das Spannfutter 1 ist als sogenanntes Hydrodehnspannfutter ausgebildet, bei welchem das Werkzeug 6 hydraulisch gespannt wird, wobei der Druck auf das Werkzeug 6 über einen Ringkanal 11 erzeugt wird, der im Spannabschnitt 3 des Spannfutters 1 liegt. Das Erhöhen und Erniedrigen des Drucks erfolgt über eine Stellschraube (nicht dargestellt) welche in einer Bohrung 12 angeordnet ist. Die Vorrichtung 9 besteht im Wesentlichen aus einer Hülse 13 , einem Rohrabschnitt 14 und einer Stellschraube 15 , wobei das Rohrelement 14 und die Stellschraube 15 einteilig als Rohrschraube 16 ausgebildet sind. Die Hülse 13 weist eine Durchgangsbohrung 17 auf. In einem zum Werkzeug 6 hin orientierten Endbereich 18 ist die Hülse 13 mit einem ringförmigen Absatz 19 versehen und weist im Bereich der Durchgangsbohrung 17 eine O-Ringdichtung 20 auf. Mittels einer Gewindehülse 21 mit einem Außengewinde G21 ist die Hülse 13 mit dem Spannfutter 1 verschraubt, wobei die Hülse 13 von der Gewindehülse 21 gegen eine Wandung 22 des Spannfutters 1 gedrückt wird. Hierbei übt die Gewindehülse 21 auf den Absatz 19 der Hülse 13 Druck aus und der Absatz 19 stützt sich über eine O-Ringdichtung 23 gegen die Wandung 22 ab. An einem weiteren Endabschnitt 24 , welcher zu der nicht dargestellten Spindel orientiert ist, mündet die Leitung 10 in die Hülse 13 . Diese Verbindung von Hülse 13 und Leitung 10 existiert jedoch nur, wenn das Spannfutter 1 an die Spindel gekuppelt ist. Das Rohrelement 14 ist in die Hülse 13 teilweise eingesteckt und ist gegenüber der Hülse 13 durch die in der Hülse gelagerte O-Ringdichtung 20 abgedichtet. An einem ersten Endabschnitt 25 , welcher von dem Werkzeug 6 weg weist, ist ein vom Rohrelement 14 gebildeter Kanal 26 als Eingriff 27 für ein nicht dargestelltes Stellwerkzeug ausgebildet. Der Kanal 26 des Rohrelements 14 geht in einem in Richtung des Werkzeugs 6 orientierten Endabschnitt 28 in einen Kanal 29 über, welcher die einteilig mit dem Rohrelement 14 ausgebildete Stellschraube 15 in Richtung des Werkzeugs 6 durchläuft. Die Stellschraube 15 ist mit einem Außengewinde G15 in einem Innengewinde G2 der Bohrung 2, welche das Spannfutter 1 durchläuft, verstellbar geführt. Aus der in der Fig. 1 dargestellten Position ist die Rohrschraube 16 in eine Pfeilrichtung z auf das Werkzeug 6 zu verstellbar. Dieses Verstellen bzw. Längsverschieben erfolgt mit Hilfe des nicht dargestellten Stellwerkzeugs, welches in die durch den Eingriff 27 gebildete Aufnahme für einen Steckschlüssel greift und die Rohrschraube 16 gegenüber dem Spannfutter 1 in eine Drehrichtung w um die Längsachse l dreht. Das Rohrelement 14 der Rohrschraube 16 wird bei dieser Bewegung von der Stellschraube 15 in die Pfeilrichtung x langsam aus der Hülse 13 herausgezogen und die Stellschraube 15 bewegt sich auf die Bodenfläche 8 des Werkzeugs 6 zu. Das Nachstellen der Stellschraube 15 bzw. des Rohrelements 14 ist abgeschlossen, wenn eine Stirnseite 30 der Stellschraube 15 dichtend mit dem Werkzeug 6 abschließt. Nach dem Abschluss dieser Verstellbewegung ist die Rohrschraube 16 um ein Maß a in Richtung z verschoben, so dass das Rohrelement 14 nicht mehr so tief in der Hülse 13 steckt. Die für das Nachstellen erforderliche Verlängerung der Vorrichtung 1 erfolgt somit durch eine auseinanderziehen der Hülse 13 und des Rohrelements 14. Durch eine der Drehrichtung w entgegengesetzte Drehung des Steckschlüssels im Eingriff 27 erfolgt ein Zurückziehen der Stellschraube 15 in die Pfeilrichtung z' und ein Zusammenschieben bzw. Verkürzen der Vorrichtung 9, was durch ein tieferes Einschieben des Rohrelements 14 in die Hülse 13 erfolgt. Anders ausgedrückt ist die Rohrschraube 16 relativ zu dem Spannfutter 1 verschiebbar in der Hülse 13 und im Gewinde G2 angeordnet.

Weiterhin erlaubt die Vorrichtung 9 zur automatischen Einstellung der Einspanntiefe des Werkzeugs 6 eine nur symbolisch angedeutete Lanze 31 einer nicht dargestellten automatischen Werkzeugjustiervorrichtung durch die Hülse 13 , das Rohrelement 14 und die Stellschraube 15 hindurch zu führen, so dass diese als Anschlag für das Werkzeug 6 dient. Das heißt, das Werkzeug 6 wird im entspannten Zustand des Hydrodehnspannfutters 1 an die Lanze 31 herangeschoben und anschließend im Hydrodehnspannfutter 1 eingespannt, so dass es in der durch die Lanze vorgegebenen Einspanntiefe gehalten wird. Anschließend wird die Vorrichtung 9 so verstellt, dass die Stellschraube 15 das Werkzeug 6 kontaktiert.

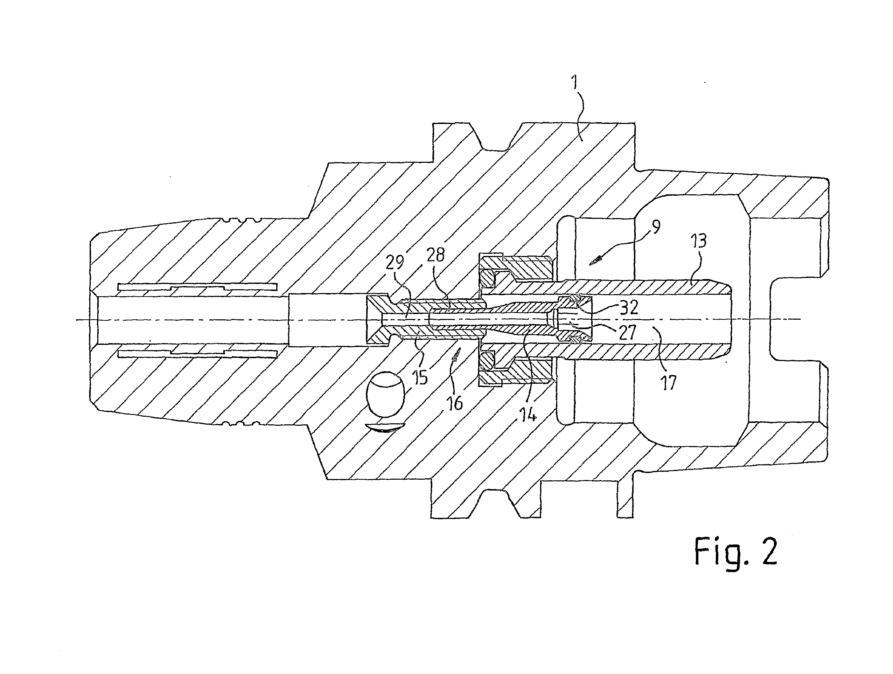

In der Fig. 2 ist das in Fig. 1 gezeigte Spannfutter 1 nochmals dargestellt, wobei die Rohrschraube 16 zweiteilig ausgebildet ist. Die Rohrschraube 16 besteht hier aus einem Rohrelement 14 , welches mit einem Endabschnitt 28 in einen Kanal 29 einer Stellschraube 15 steckt und mit dieser verklebt ist. Somit sind das Rohrelement 14 und die Stellschraube 15 drehfest miteinander verbunden. Eine Drehung eines Steckschlüssels, welcher in einen Eingriff 27 des Rohrelements 14 greift, bewirkt eine gemeinsame Drehung und Verschiebung des Rohrelements 14 und der Stellschraube 15 . Im weiteren Unterschied zu der in der Fig. 1 gezeigten Konstruktion des Kühl- bzw. Schmiermittelübergabesatzes 9, weist das Rohrelement 14 eine O-Ringdichtung 32 auf mit welcher dieses in der Durchgangsbohrung 17 der Hülse 15 verfahrbar ist.

Gemäß einer nicht dargestellten Ausführungsvariante ist es vorgesehen, einen Eingriff für einen Steckschlüssel in der Stellschraube vorzusehen und den Kanal des Rohrelements und die Durchgangsbohrung der Hülse so zu bemessen, dass der Steckschlüssel durch diese hindurch in den Eingriff eingreifen kann.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere ist es vorgesehen bei einer mehrteiligen Ausführung von Einstellschraube und Rohrelement, Rohrelemente unterschiedlicher Länge bereitzuhalten, um Spannfutter mit unterschiedlichen Abmessungen erfindungsgemäß ausbilden zu können. Bei einer einteiligen Ausführung von Stellschraube und Spannfutter sind entsprechend Bauteile unterschiedlicher Länge vorgesehen.

Zusammenfassend wird darauf hingewiesen, dass folgende Aspekte für die vorliegende Erfindung von besonderer Bedeutung sind und dass die entsprechenden Merkmalskomplexe für sich und in Kombination miteinander als zur Erfindung gehörig offenbart gelten sollen:
Aspekt 1:
   Spannfutter (1) für ein Werkzeug (6) mit einer Vorrichtung (9) zur Zuführung eines Kühl- und/oder Schmiermediums an einen Mediumkanal (7) des im Spannfutter (1) gehaltenen Werkzeugs (6), wobei in dem Spannfutter (1) eine Hülse (13) angeordnet ist, welche als Kupplung für eine Zufuhrleitung (10) für die Versorgung mit Medium dient, wobei in der Hülse (13) ein Rohrelement (14) steckt, dem eine Stellschraube (15) nachgeordnet ist und wobei die Stellschraube (15) gegenüber dem Spannfutter (1) in Richtung der Längsachse (l) des Spannfutters (1) verstellbar ist, wobei das Rohrelement (14) in der Hülse (13) in Richtung der Längsachse (l) des Spannfutters (1) verschiebbar ist und ein Eingriff (27) in dem Rohrelement (14) oder der Stellschraube (15) ausgebildet ist, mit der Besonderheit, dass das Rohrelement (14) auf der dem Werkzeug (6) entgegengesetzten Seite (25) über ein Stellwerkzeug betätigbar ist und mit der Stellschraube (15) drehfest verbunden ist, .
Aspekt 2:
   Spannfutter nach Aspekt 1, bei dem das Rohrelement (14) mit der Stellschraube (15) verklebt und/oder verschraubt ist und/oder in Bezug auf die Stellschraube eine Kontur aufweist, die ein Verdrehen des Rohrelements (14) in der Stellschraube verhindert.
Aspekt 3:
   Spannfutter nach Aspekt 1 oder 2, bei dem das Rohrelement (14) und die Stellschraube (15) einteilig, insbesondere als Drehteil (16) ausgebildet sind.
Aspekt 4:
   Spannfutter nach einem der vorhergehenden Aspekte, bei dem das Rohrelement (14) und die Hülse (13), insbesondere durch eine Durchgangsbohrung (17) so ausgebildet sind, dass ein Stellwerkzeug zum Verdrehen des Rohrelements (14) in dieses eingreifen kann.
Aspekt 5:
   Spannfutter (1) für ein Werkzeug (6) mit einer Vorrichtung (9) zur Zuführung eines Kühl- und/oder Schmiermediums an einen Mediumkanal (7) des im Spannfutter (1) gehaltenen Werkzeugs (6), wobei in dem Spannfutter (1) eine Hülse (13) angeordnet ist, welche als Kupplung für eine Zufuhrleitung (10) für die Versorgung mit Medium dient, wobei sich eine Durchgangsbohrung in der Hülse (13) in einem Rohrelement (14) fortsetzt, dem eine Stellschraube (15) nachgeordnet ist und wobei die Stellschraube (15) gegenüber dem Spannfutter (1) in Richtung der Längsachse (l) des Spannfutters (1) verstellbar ist, mit der Besonderheit, dass das Rohrelement (14) in der Hülse (13) und/oder in der Stellschraube (15) verschiebbar geführt ist, dass ein Kanal (29) des Rohrelements (14) und die Durchgangsbohrung der Hülse (13) so bemessen sind, dass das Stellwerkzeug von der dem Werkzeug (6) entgegengesetzten Seite durch die Hülse (13) und das Rohrelement (14) auf die Stellschraube (15) einwirken kann und dass das Stellwerkzeug gegenüber der Hülse (13) und dem Rohrelement (14) frei drehbar ist.
Aspekt 6:
   Spannfutter gemäß Aspekt 5, bei dem die Hülse (13) und das Rohrelement (14) einteilig ausgebildet sind.
Aspekt 7:
   Spannfutter nach einem der vorhergehenden Aspekte, bei dem das Rohrelement (14) gegenüber der Hülse (13) abgedichtet ist.
Aspekt 8:
   Spannfutter nach einem der vorhergehenden Aspekte, bei dem das Rohrelement (14) gegenüber der Hülse (13) mittels wenigstens einer O-Ringdichtung (20, 32) abgedichtet ist, wobei die O-Ringdichtung (20, 32) in der Hülse (13) und/oder an dem Rohrelement (14) gelagert ist.
Aspekt 9:
   Spannfutter nach einem der vorhergehenden Aspekte, bei dem das Rohrelement (14) gegenüber der Hülse (13) mittels einer Berührungsdichtung oder Lippendichtung abgedichtet ist.
Aspekt 10:
   Spannfutter nach einem der vorhergehenden Aspekte, bei dem die Hülse (13), das Rohrelement (14) und die Stellschraube (15) aus Kunststoff und/oder Metall und/oder Keramik ausgebildet sind.
Aspekt 11:
   Spannfutter nach einem der vorhergehenden Aspekte, bei dem die Hülse (13) und/oder das Rohrelement (14) und/oder die Stellschraube (15) eine Beschichtung aufweisen.
Aspekt 12:
   Spannfutter nach einem der vorhergehenden Aspekte, bei dem die Hülse (13), das Rohrelement (14) und die Stellschraube (15) von einem Verstellbolzen (31) einer automatischen Vorrichtung zur Einstellung der Position des Werkzeugs (6) durchdringbar sind, so dass der Verstellbolzen (31) in Richtung der Längsachse (l) des Spannfutters (1), z.B. zur Positionierung eines Werkzeugs, verschiebbar ist.
Aspekt 13:
   Spannfutter nach einem der vorhergehenden Aspekte, bei dem das Stellwerkzeug mittelbar oder unmittelbar auf das Rohrelement (14) wirkt.
Aspekt 14:
   Spannfutter nach einem der vorhergehenden Aspekte, bei dem das Rohrelement (14) aus wenigstes zwei Teilelementen aufgebaut ist.
Aspekt 15:
   Spannfutter nach einem der vorhergehenden Aspekte, bei dem die Teilelemente, welche das Rohrelement (14) bilden, aus unterschiedlichen Materialien, insbesondere aus CFK oder Kunststoff und Metall ausgebildet sind.
Aspekt 16:
   Spannfutter nach einem der vorhergehenden Aspekte, bei dem der Eingriff (27) in dem Rohrelement (14) als Schlitz, Innenvielkant, insbesondere Innensechskant, Innen-Torx-Ausnehmung oder Außenvielkant, insbesondere Außenvierkant ausgebildet ist.
Aspekt 17:
   Spannfutter nach einem der vorhergehenden Aspekte, bei dem zwischen dem Eingriff (27) des Rohrelements (14) und dem Stellwerkzeug ein Adapter angeordnet ist, welcher abnehmbar ist oder auch im Betrieb des Spannfutters mit dem Rohrelement verbunden bleibt.
Aspekt 18:
   Stellschraube für die abgedichtete Einspeisung von Schmiermittel in ein Werkzeug und zur Verwendung mit einem Spannfutter, insbesondere gemäß einem der vorstehenden Aspekte, in dem die Einstecktiefe des Werkzeugs veränderbar ist, mit einem Außengewinde (G15) zum Eingriff in ein Spannfutter (4), in dem eine mit einer Durchgangsbohrung (17) ausgestattete Einspeisehülse (13) aufgenommen ist, einer Anschlag-Stirnseite (30) für das Werkzeug, einem Kanal (29) für die Zufuhr von Schmiermittel, der die Verlängerung eines Kanals (26) in einem Rohrabschnitt (14) bildet, und einem Eingriff (27) für ein Verstellwerkzeug, mit dem die Anschlag-Stirnseite aus einer Stellung, in der sie an einem Anschlag im Spannfutter anschlägt, an das im Spannfutter aufgenommene Werkzeug heran drehbar ist, dadurch gekennzeichnet, dass der Anschlag mit dem Spannfutter von einem gegenüber dem Außengewinde (G15) im Durchmesser vergrößerten Schraubenkopf gebildet ist, und der Eingriff (27) in der Stellschraube (15) so ausgebildet ist, dass diese mittels eines Werkzeugs unter Durchgriff der Durchgangsbohrung (17) der Einspeisehülse (13) und des Kanals (29) des Rohrabschnitts (14) verstellbar ist.
Aspekt 19:
   Stellschraube nach Aspekt 18, bei der die Stellschraube einstückig mit dem Rohrabschnitt (14) ausgebildet ist.
Aspekt 20:
   Stellschraube nach Aspekt 18, bei der die Länge des Rohrabschnitts (14) an die Abmessung des betreffenden Spannfutters angepasst ist.

### Bezugszeichenliste

- 1: Spannfutter
- 2: Bohrung in 2
- 3: Spannabschnitt von 1
- 4: Mittelabschnitt von 1
- 5: Kupplungsabschnitt von 1
- 6: Werkzeug
- 7: Mediumkanal in 6
- 8: Bodenfläche von 6
- 9: Vorrichtung
- 10: Leitung (von der Spindel)
- 11: Ringkanal in 1
- 12: Bohrung in 1
- 13: Hülse
- 14: Rohrelement
- 15: Stellschraube
- 16: Rohrschraube
- 17: Durchgangsbohrung in 13
- 18: Endbereich von 13
- 19: Absatz an 13
- 20: O-Ringdichtung von 13
- 21: Gewindehülse
- 22: Wandung
- 23: O-Ringdichtung zwischen 13 und 1
- 24: Endabschnitt von 13
- 25: Endabschnitt von 14
- 26: Kanal von 14
- 27: Eingriff für Stellwerkzeug in 13
- 28: Endabschnitt von 14
- 29: Kanal von 15
- 30: Stirnseite von 15
- 31: Lanze
- 32: O-Ringdichtung an 14
- l: Längsachse von 1
- G2, G15, G21: Gewinde

## Patentansprüche

1. Stellschraube für die abgedichtete Einspeisung von Schmiermittel in ein Werkzeug und zur Verwendung mit einem Spannfutter, in dem die Einstecktiefe des Werkzeugs veränderbar ist, mit einem Außengewinde (G15) zum Eingriff in ein Spannfutter (4), in dem eine mit einer Durchgangsbohrung (17) ausgestattete Einspeisehülse (13) aufgenommen ist, einer Anschlag-Stirnseite (30) für das Werkzeug, einem Kanal (29) für die Zufuhr von Schmiermittel, der die Verlängerung eines Kanals (26) in einem Rohrabschnitt (14) bildet, und einem Eingriff (27) für ein Verstellwerkzeug, mit dem die Anschlag-Stirnseite aus einer Stellung, in der sie an einem Anschlag im Spannfutter anschlägt, an das im Spannfutter aufgenommene Werkzeug heran drehbar ist, **dadurch gekennzeichnet, dass** der Anschlag mit dem Spannfutter von einem gegenüber dem Außengewinde (G15) im Durchmesser vergrößerten Schraubenkopf gebildet ist, und der Eingriff (27) in der Stellschraube (15) so ausgebildet ist, dass diese mittels eines Stellwerkzeugs unter Durchgriff der Durchgangsbohrung (17) der Einspeisehülse (13) und des Kanals (29) des Rohrabschnitts (14) verstellbar ist.

2. Stellschraube nach Anspruch 1, **dadurch gekennzeichnet, dass** die Stellschraube einstückig mit dem Rohrabschnitt (14) ausgebildet ist.

3. Stellschraube nach Anspruch 1 oder 2, **dadurch gekennzeichnet, dass** die Länge des Rohrabschnitts (14) an die Abmessung des betreffenden Spannfutters angepasst ist.

4. Stellschraube nach Anspruch 2 oder 3, **dadurch gekennzeichnet, dass** der Rohrabschnitt von einem Rohrelement (14) gebildet ist, das mit der Stellschraube (15) verklebt und/oder verschraubt ist und/oder in Bezug auf die Stellschraube eine Kontur aufweist, die ein Verdrehen des Rohrelements (14) in der Stellschraube verhindert.

5. Stellschraube nach Anspruch 2 oder 3, **dadurch gekennzeichnet, dass** der Rohrabschnitt von einem Rohrelement (14) gebildet ist, das mit der Stellschraube (15) einteilig, insbesondere als Drehteil (16) ausgebildet ist.

6. Stellschraube nach einem der vorhergehenden Ansprüche, **dadurch gekennzeichnet, dass** sich ein Kanal (29) in der Stellschraube (15) zum Werkzeug (6) hin trichterförmig öffnet.

7. Werkzeug-Spannfutter mit einer Stellschraube nach einem der Ansprüche 1 bis 6, mit einer Vorrichtung (9) zur Zuführung eines Kühl- und/oder Schmiermediums an einen Mediumkanal (7) des im Spannfutter (1) gehaltenen Werkzeugs (6), wobei in dem Spannfutter (1) eine Hülse (13) angeordnet ist, welche als Kupplung für eine Zufuhrleitung (10) für die Versorgung mit Medium dient, wobei sich an die Hülse (13) ein Rohrabschnitt (14) anschließt, welcher der gegenüber dem Spannfutter (1) in Richtung der Längsachse (l) des Spannfutters (1) verstellbaren Stellschraube (15) nachgeordnet ist.

8. Spannfutter nach Anspruch 7, **dadurch gekennzeichnet, dass** der Rohrabschnitt von einem Rohrelement (14) gebildet ist, das in der Hülse (13) in Richtung der Längsachse (l) des Spannfutters (1) verschiebbar ist, wobei ein Eingriff (27) in dem Rohrelement (14) oder der Stellschraube (15) ausgebildet ist und das Rohrelement (14) auf der dem Werkzeug (6) entgegengesetzten Seite (25) über ein Stellwerkzeug betätigbar ist und mit der Stellschraube (15) drehfest verbunden ist.

9. Spannfutter nach Anspruch 7, **dadurch gekennzeichnet, dass** der Rohrabschnitt als Rohrelement (14) ausgebildet ist, das in der Hülse (13) und/oder in der Stellschraube (15) verschiebbar geführt ist, wobei ein Kanal (29) des Rohrelements (14) und die Durchgangsbohrung der Hülse (13) so bemessen sind, dass ein Stellwerkzeug von der dem Werkzeug (6) entgegengesetzten Seite durch die Hülse (13) und das Rohrelement (14) auf die Stellschraube (15) einwirken kann und dass das Stellwerkzeug gegenüber der Hülse (13) und dem Rohrelement (14) frei drehbar ist.

10. Spannfutter nach einem der vorhergehenden Ansprüche, **dadurch gekennzeichnet, dass** die Hülse (13) einen Innendurchmesser aufweist, welcher sich zu dem Rohrabschnitt (14) hin wenigstens abschnittsweise verjüngt.

11. Spannfutter nach einem der vorhergehenden Ansprüche, **dadurch gekennzeichnet, dass** die Hülse (13), das Rohrelement (14) und die Stellschraube (15) von einem Verstellbolzen (31) einer automatischen Vorrichtung zur Einstellung der Position des Werkzeugs (6) durchdringbar sind, so dass der Verstellbolzen (31) in Richtung der Längsachse (l) des Spannfutters (1), z.B. zur Positionierung eines Werkzeugs, verschiebbar ist.

12. Spannfutter nach einem der vorhergehenden Ansprüche, **dadurch gekennzeichnet, dass** das Rohrelement (14) aus wenigstes zwei Teilelementen aufgebaut ist.

13. Spannfutter nach einem der vorhergehenden Ansprüche, **dadurch gekennzeichnet, dass** die Teilelemente, welche das Rohrelement (14) bilden, aus unterschiedlichen Materialien, insbesondere aus CFK oder Kunststoff und Metall ausgebildet sind.

14. Spannfutter nach einem der vorhergehenden Ansprüche, **dadurch gekennzeichnet, dass** zwischen dem Eingriff (27) des Rohrelements (14) und dem Stellwerkzeug ein Adapter angeordnet ist, welcher abnehmbar ist oder auch im Betrieb des Spannfutters mit dem Rohrelement verbunden bleibt.
